# EUROPÄISCHE PATENTSCHRIFT

(11) **EP 1 136 674 B1**
(45) Veröffentlichungstag und Bekanntmachung des Hinweises auf die Patenterteilung: **08.02.2006**
(21) Anmeldenummer: 01105204.0
(22) Anmeldetag: 03.03.2001
(51) Int. Cl.: F02B 27/02

(54) **Ansaugvorrichtung mit Schwingrohren und längenverstellbaren Resonanzrohren**
Intake device with inertia supercharging tubes and resonant tubes of adjustable length
Dispositif d'admission avec des tube de suralimentation par inertie et avec des tubes de résonance à longueur variable

(30) Priorität: 22.03.2000 DE 10014282
(43) Veröffentlichungstag der Anmeldung: 26.09.2001
(73) Patentinhaber: Mann + Hummel GmbH, 71638 Ludwigsburg (DE)
(72) Erfinder: Pietrowski, Herbert, 74385 Pleidelsheim (DE); Wild, Stephan, Dr., 75305 Neuenbürg (DE); Wagner, Werner, 71640 Ludwigsburg (DE)
(74) Vertreter: Voth, Gerhard

(56) Entgegenhaltungen:
- EP-A- 0 255 059
- WO-A-00/11332
- DE-A- 3 843 690
- DE-A- 3 940 486
- DE-A- 19 800 063

## Beschreibung

### Stand der Technik

Die Erfindung betrifft eine Ansaugvorrichtung, insbesondere ein Saugrohr für eine Brennkraftmaschine, welche zur Nutzung von Schwingrohraufladungseffekten einen Schwingsammler mit Saugkanälen als Schwingrohre und zur Nutzung von Effekten der Resonanzaufladung längenverstellbare Resonanzkanäle und einen Resonanzsammler aufweist, nach der Gattung des Patentanspruches 1.

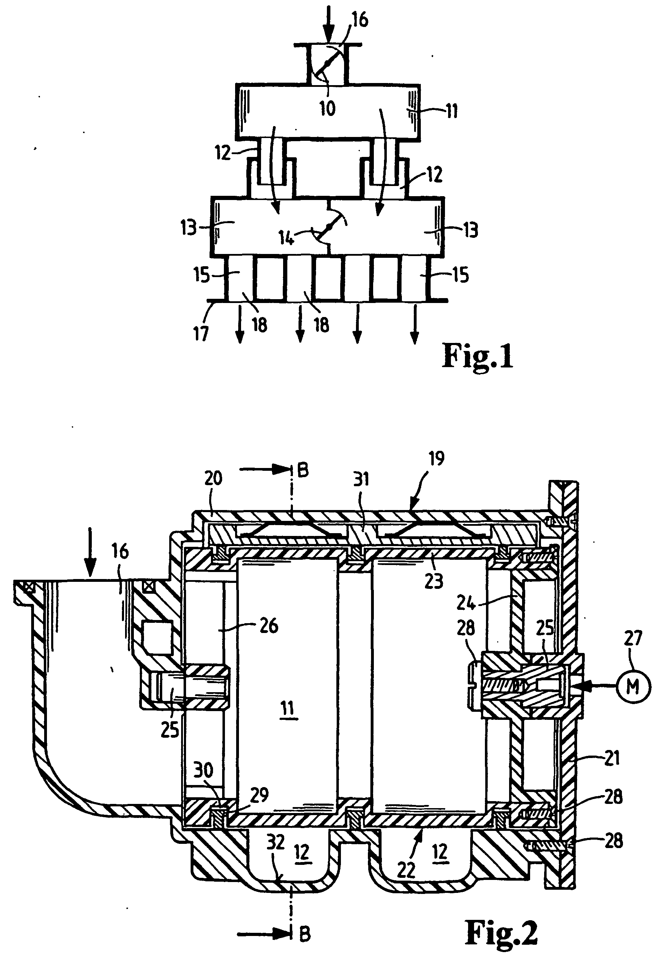

Die Nutzung der beschriebenen Effekte der Resonanz- sowie Schwingrohraufladung sind bekannt und gem. der DE 39 40 486 A1 auch in einer Ansaugvorrichtung gleichzeitig verwirklicht. Die Funktion einer solchen Ansaugvorrichtung kann z. B. anhand von Figur 2 des genannten Dokumentes nachvollzogen werden. Der Resonanzsammler ist in einer hohlzylindrischen Walze 22 untergebracht und mit einem Einlass für die Verbrennungsluft versehen. Über Öffnungen 8a, 8b gelangt die Luft in einen Resonanzkanal 8, der durch Drehung der Walze 22 längenverstellbar ist. Der Resonanzkanal mündet in einen Schwingsammler 6, durch den die Verbrennungsluft in Saugkanäle 2 gelangt, die in einem Zylinderkopfflansch 4 zur Verbindung mit der Brennkraftmaschine münden. Parallel zum Schwingsammler 6 ist ein Schwingsammler 7 angeordnet, der analog zum Schwingsammler 6 funktioniert. Beide Schwingsammler sind in nicht dargestellter Weise über einen verschließbaren Kanal miteinander verbunden. Dieser Kanal wird durch eine Resonanzklappe verschlossen, wobei bei geschlossener Klappe der Effekt der Resonanzaufladung und bei geöffneter Klappe der Effekt der Schwingrohraufladung der Brennkraftmaschine mit Verbrennungsluft genutzt werden kann.

Die dargestellte Lösung für das Saugrohr ist sehr kompakt ausgeführt, indem die Gehäusebereiche der Resonanzkanäle und des Saugrohrs, enthaltend die Schwingsammler 6, 7 und die Saugkanäle 2, 3, ineinander verschachtelt sind. Dennoch benötigt die gesamte Ansaugvorrichtung aufgrund der geforderten Mindestradien der von der Verbrennungsluft durchströmten Kanäle einen Bauraum, der im dargestellten Anwendungsfall einer Brennkraftmaschine mit V- förmiger Zylinderanordnung in seltenen Fällen zur Verfügung steht. Zudem zeichnet sich die Ansaugvorrichtung durch eine beträchtliche Bauhöhe aus, so dass, sofern der Einbau Ansaugvorrichtung in die Brennkraftmaschine gelingt, deren Gesamthöhe schwer im Motorraum eines Fahrzeugs unterzubringen ist.

Aufgabe der Erfindung ist es daher, ein Ansaugsystem mit Saugkanälen und längenverstellbaren Resonanzkanälen zu schaffen, welches optimal an die geometrischen Randbedingungen des Einbauraums angepasst werden kann. Diese Aufgabe wird durch die Merkmale des Patentanspruches 1 gelöst.

### Vorteile der Erfindung

Die erfindungsgemäße Ansaugvorrichtung besitzt längenverstellbare Resonanzkanäle, die sich schneckenförmig um mindestens einen Resonanzsammler winden. Es ist auch möglich, dass sich die Resonanzkanäle um zwei verschiedene Resonanzsammler winden, wobei die Resonanzsammler über eine Leitung miteinander kommunizieren müssen, um den Effekt der Resonanzaufladung zu gewährleisten. Als Sammler im Sinne der Erfindung werden somit akustisch wirksame Volumina definiert. Die akustisch wirksame Verbindung zwischen zwei Resonanzsammlern zählt genaugenommen also zu dem Volumen, welche zu den Resonanzeffekten führen. Die Länge der Resonanzkanäle wird durch Drehung eines oder mehrerer Stellkörper erzielt, welche in einem Stellgehäuse zusammengefasst sind oder in unterschiedlichen Stellgehäusen untergebracht sein können. Der Stellkörper enthält in seinem zentralen Bereich den Resonanzsammler, so dass die Verbindungsöffnung zwischen Resonanzsammler und Resonanzkanälen durch Drehung des Stellkörpers verschoben werden kann, wodurch die effektive Länge der Resonanzkanäle veränderbar ist.

Die Saugkanäle sind zwei Gruppen zuzuordnen und führen dementsprechend zu Austritten in mindestens einem Zylinderkopfflansch. Vorstellbar ist ein Saugrohr für einen Verbrennungsmotor mit Reihenanordnung der Zylinder. Hier laufen beide Gruppen von Zylindern in einem Zylinderkopfflansch zusammen. Das Saugrohr kann aber auch für eine Brennkraftmaschine mit V-Anordnung der Zylinder gedacht sein, wobei die Gruppen von Saugkanälen mit den zugehörigen Auslässen jeweils für eine Zylinderbank vorgesehen sind. Grundsätzlich ist z. B. für eine Brennkraftmaschine mit W-Anordnung der Zylinder eine Teilung der Saugkanäle in drei verschiedene Gruppen denkbar.

Pro Schwingsammler muss wenigstens ein Resonanzkanal vorgesehen werden. Es können aber auch mehrere Resonanzkanäle angeordnet werden, wodurch die notwenige Querschnittsfläche für die Resonanzkanäle besser an die geometrischen Randbedingungen der Ansaugvorrichtung angepasst werden kann. Durch eine Abschaltung eines Teils der Resonanzkanäle lässt sich eine Verringerung der gesamten Querschnittsfläche der Resonanzkanäle erreichen. Die Resonanzklappe zwischen den Schwingsammlern kann entweder in einem Kanal angeordnet werden, welcher die unterschiedlichen Schwingsammler miteinander verbindet. Eine andere Möglichkeit besteht in einer Anordnung der Resonanzklappe in einer Trennwand zwischen den Schwingsammlem. Hierbei lässt sich ein stärkerer Integrationsgrad der einzelnen Volumina in eine Gehäusestruktur erreichen. Auch die Stellgehäuse können in die Gehäusestruktur der Ansaugvorrichtung integriert sein.

Gekennzeichnet ist die Erfindung durch einen Verbindungskanal, welcher sich zwischen den Resonanzkanälen und den Schwingsammlern erstreckt und zur Überbrückung einer räumlichen Distanz beiträgt, die sich zwischen den Schwingsammlern und dem im wesentlichen zylindrischen Volumen des Stellgehäuses ergibt. Auf diese Weise ist eine komplexe Integration der einzelnen Bauteile in eine Gehäusestruktur der Ansaugvorrichtung entsprechend der DE 39 40 486 nicht notwendig. Die Verbindungskanäle ermöglichen einen größeren Gestaltungsspielraum bei der Anordnung des Stellgehäuses. Dadurch kann die Geometrie des Saugrohrs optimal an den vorgesehenen Einbauraum angepasst werden. Die Verbindungskanäle verlängern dabei die längenverstellbaren Resonanzkanäle und wirken sich dementsprechend hinsichtlich des Resonanzeffektes aus. Bei der Konstruktion der Ansaugvorrichtung ist daher auf die geforderten Längenverhältnisse und den geforderten Stellbereich durch die Längenverstellung zu achten. Innerhalb dieser Randbedingungen können die Verbindungskanäle in ihrer Geometrie frei gestaltet werden.

Gemäß einer günstigen Ausgestaltung der Erfindung sind mehrere Resonanzkanäle in ein einziges Gehäuse integriert. Hierdurch verringert sich der Komponentenaufwand für die Resonanzkanalverstellung und es entsteht ein kompaktes Stellgehäuse. Im günstigsten Fall werden für die Ansaugvorrichtung zwei Resonanzkanäle vorgesehen, die nebeneinander in einem trommelförmigen Stellgehäuse angeordnet sind. Der Lufteinlass befindet sich beispielsweise in der Drehachse für die Stellkörper, und die Verbindungskanäle schließen sich tangential an den äußeren Umfang des Stellgehäuses an, wobei durch eine entsprechende Krümmung der Verbindungskanäle die Luft in den Resonanzkanälen auch umgelenkt und an die entsprechenden Einlässe in den Schwingsammlern weitergegeben werden kann.

Gemäß einer weiteren Ausgestaltung der Erfindung sind die Resonanzkanäle um den Resonanzsammler herum versetzt angeordnet. Dadurch können die Verbindungskanäle unterschiedlich lang ausgebildet werden, wodurch die Gesamtlänge der Resonanzkanäle unabhängig von der Stellung des Stellkörpers gleich lang ausfallen. Dadurch wird die Gestaltungsfreiheit bei der Anordnung des Stellgehäuses in der Ansaugvorrichtung weiter vergrößert.

Gemäß einer weiteren Ausgestaltung der Erfindung werden mehrere Resonanzkanäle in einem Stellkörper zusammengefasst. Hierdurch lässt sich der Aufwand an Komponenten weiter einschränken, wodurch das Bauteil wirtschaftlicher in der Herstellung wird.

Es ist vorteilhaft, die Verbindungskanäle in einem Mehrkammerprofil zusammenzuführen. Dieses Mehrkammerprofil bildet für jeden der Verbindungskanäle eine gesonderten Querschnitt. Insgesamt lässt sich dadurch, dass bestimmte Wandteile von jedem Verbindungskanal genutzt werden können eine Materialeinsparung erreichen. Außerdem kann bei der Verbindung des Mehrkammerrohres mit weiteren Gehäusestrukturen der Ansaugvorrichtung Montageaufwand eingespart werden.

Das Stellgehäuse ist getrennt von einem Saugrohrgehäuse ausgeführt, wobei beide Gehäuse zusammen die Ansaugvorrichtung ergeben und im Saugrohrgehäuse zumindest die Schwingsammler und die Saugkanäle enthalten sind. Die Verbindung zwischen Saugrohrgehäuse und Stellgehäuse wird zumindest über die Verbindungskanäle gewährleistet. Zusätzlich können zusätzliche Montagevorrichtungen vorgesehen sein, die zu einer steiferen Verbindung führen bzw. die Montage erleichtern. Wird das Stellgehäuse einzeln ausgeführt, kann dieses in vorteilhafter Weise als Modul verwendet werden, welches zur Befestigung an verschiedenen Saugrohren geeignet ist. Somit kann das Stellgehäuse an verschiedene Saugrohre angepasst werden, wodurch der Aufwand einer Neukonstruktion immer nur für das Saugrohrgehäuse anfällt. Auf diese Weise lassen sich Baureihen entwickeln, wobei auch unterschiedliche Motorvarianten mit Saugrohren ausgestattet werden können, welche abhängig von der Ausstattung mit oder ohne eine Aufladung durch Resonanzrohre vorgesehen sind.

Um eine Anpassung auf die unterschiedlichen Saugrohre zu ermöglichen, können die Verbindungskanäle des Stellgehäuses gem. einer weiteren Ausgestaltung der Erfindung zumindest teilweise als Adapterstücke ausgeführt sein. Dadurch ist eine geometrische Anpassung an verschiedene Saugrohrgehäuse durch Verwendung unterschiedlicher Adapterstücke möglich.

Eine besonders einfache Möglichkeit besteht in der Anbringung des Stellgehäuses an dem Drosselklappenstutzen des Saugrohrgehäuses. Die Drosselklappe wird dann nicht mehr am Saugrohrgehäuse sondern am Einlass für die Verbrennungsluft am Stellgehäuse montiert. Auf diese Weise ist auch eine Nachrüstung der Resonanzaufladung an bereits bestehende Saugrohrkonzepte denkbar, welche die Angliederung einer modular aufgebauten Drosselklappe am Einlassstutzen des Saugrohrs vorsehen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten werden in den Zeichnungen anhand von schematischen Ausführungsbeispielen beschrieben. Hierbei zeigen
- Figur 1: die schematische Funktionsweise eines Saugrohrs mit Resonanz- und Schwingrohraufladung,
- Figur 2: ein Ausführungsbeispiel für ein Stellgehäuse im Längsschnitt,
- Figur 3: den Schnitt B-B gem. Figur 2,
- Figur 4: die perspektivische Ansicht einer Ansaugvorrichtung für einen Reihensechszylindermotor, bestehend aus einem Saugrohrgehäuse, einem Stellgehäuse und einem Adapterstück und
- Figur 5: die schematische Darstellung einer Ansaugvorrichtung, bei der die Resonanzkanäle in zwei Stellgehäusen untergebracht sind.

### Beschreibung der Ausführungsbeispiele

Anhand Figur 1 lässt sich das eingangs beschriebene Prinzip einer Ansaugvorrichtung mit kombinierter Schwingrohr- und Resonanzaufladung erkennen. Die Strömung der Ansaugluft ist durch Pfeile angedeutet. Die Ansaugluft passiert eine Drosselklappe 10 und strömt in einen Resonanzsammler 11. Von dort gelangt sie durch längenverstellbare Resonanzkanäle 12 in zwei Schwingsammler 13, die durch eine Resonanzklappe 14 verbunden sind. Von den Schwingsammlern gehen Saugkanäle 15 aus, welche entsprechend der Schwingsammler in zwei Gruppen zu teilen sind. Durch den Drosselklappenstutzen ist ein Einlass 16 und durch einen Zylinderkopfflansch 17 sind Austritte 18 der Saugkanäle zum Zylinderkopf gebildet.

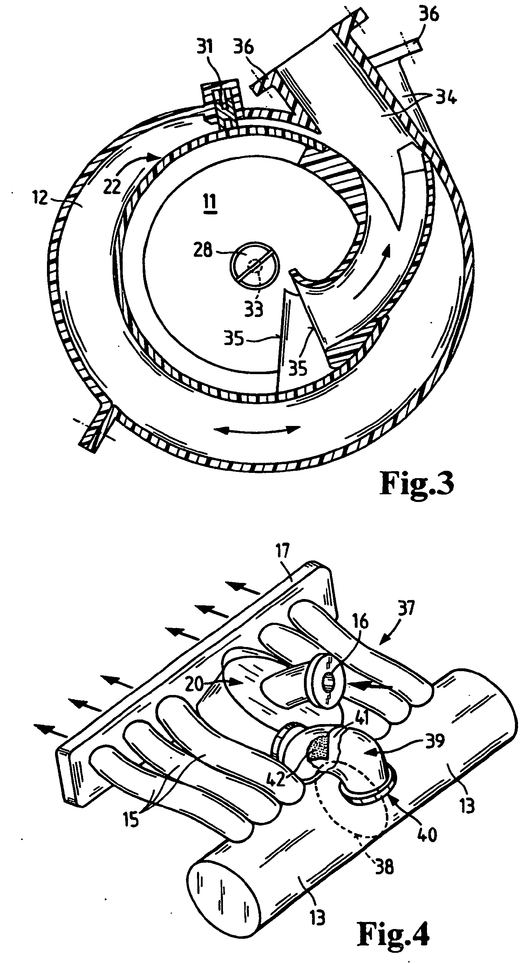

In Figur 2 ist ein Stellgehäuse 19 dargestellt, wie es in einer Ansaugvorrichtung gem. Fig. 1 zum Einsatz kommen kann. Dieses besteht aus einem im wesentlichen zylindrischem Stellgehäusekörper 20, welcher mit einem Deckel 21 verschlossen ist. Beide Resonanzkanäle 12 werden durch einen Stellkörper 22 mitgebildet, welcher aus einem Zylindermantel 23 und einem Lagerdeckel 24 besteht. Über Lagerzapfen 25 ist der Stellkörper 22 im Stellgehäuse 19 gelagert. Gegenüber dem Lagerdeckel 24 gewährleisten Radialrippen 26 die Zuleitung von Ansaugluft durch den Einlass 16 unabhängig von der Winkelstellung des Stellkörpers 22. Die Stellwalze wird durch einen Antrieb 27 verstellt. Die Montage der Bauteile der Resonanzkanalverstellung erfolgt über Schrauben 28. Eine Dichtung der beweglichen Bauteile gegenüber den Gehäusebauteilen erfolgt über Dichtringe 29, welche sich im Gehäuse radial abstützen. Diese tauchen in Nuten 30 im Stellkörper 22 ein. Weiterhin ist eine Dichtleiste 31 vorgesehen, die den Beginn der Resonanzkanäle 12 gegenüber Ausgängen zu den Schwingsammlern abdichten (vergleiche Figur 3). Die Resonanzkanäle 12 werden einerseits durch die Außenseiten des Stellkörpers 22 und andererseits durch eine Innenkontur 32 des Stellgehäuses gebildet. Sie laufen schneckenförmig um den Stellkörper herum.

In Figur 3 wird der zentralsymmetrische Verlauf der Resonanzkanäle 12 um eine Mittelachse 33 deutlich. Tangential schließen an die verstellbaren Resonanzkanäle zwei Verbindungskanäle 34 an, die zusammen mit den in den Stellkörper 22 integrierten Eintrittsöffnungen 35 versetzt angeordnet sind. Hierdurch können an den Verbindungskanälen 34 befindliche Befestigungsflansche 36 in unterschiedlichen Anschlussbereichen eines nicht dargestellten Saugrohrgehäuses angebracht sein.

In Figur 4 ist eine Ansaugvorrichtung dargestellt, die aus einem Saugrohrgehäuse 37, enthaltend Saugkanäle 15, zwei durch eine Trennwand 38 mit Resonanzklappe getrennte Schwingsammler 13, einem Zylinderkopfflansch 17, und einem gesondert ausgeführten Stellgehäuse besteht. Diese beiden Gehäuseteile sind durch ein Adapterstück 39, welches als Verbindungskanal dient, miteinander verbunden. Dabei ist das Stellgehäuse 20 platzsparend zwischen den Saugkanälen 15 untergebracht.

Das Stellgehäuse 20 weist weiterhin den Einlass 16 auf, der als Flansch für eine Drosselklappe ausgeführt ist. Das Adapterstück 39 wird mit einem Drosselklappenstutzen 40 verbunden, der über der Trennwand 38 an den beiden Schwingsammlem 13 angebracht ist und der in einer Variante des Saugrohrgehäuses 27 ohne Resonanzkanalverstellung zum Anschluss der Drosselklappe dient, die im dargestellten Fall an dem Einlass 16 angebracht wird.

Das Adapterstück 39 weist eine Kanalstruktur 41 auf, welche sich durch eine Zwischenwand 42 auszeichnet, die mit der Trennwand 38 zwischen den Schwingsammlern 13 kommuniziert. Dadurch wird in dem Adapterstück ein Querschnitt mit zwei Kammern gebildet, so dass beide Verbindungskanäle für die Resonanzkanäle im Stellgehäuse 20 durch die eine Kanalstruktur 41 gebildet sein können. Die Zwischenwand 42 ist im aufgebrochenen Teil des Adapterstückes zu erkennen.

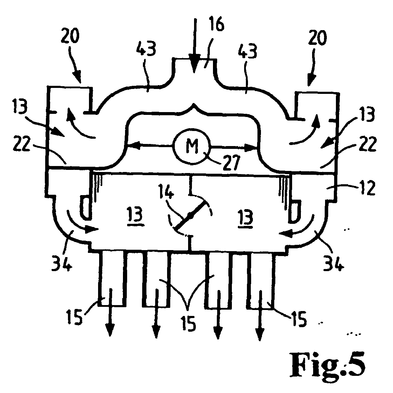

In Figur 5 ist eine alternative Ausgestaltung der Ansaugverrichtung schematisch dargestellt, in dem zwei Stellkörper 22 in unabhängigen Stellgehäusen 20 angeordnet sind. Eine Einlassleitung 43, ausgehend von dem Einlass 16, teilt sich daher auf beide Stellgehäuse 20 auf. Der Antrieb 27 ist mit beiden Stellkörpern 22 mechanisch gekoppelt, so dass eine synchrone Verstellung dieser Funktionsgruppen möglich ist. Durch die Resonanzkanäle 12, die Verbindungskanäle 34, die Schwingsammler 13 und die Saugkanäle 15 gelangt die Verbrennungsluft zu den Zylindern.

## Patentansprüche

1. Ansaugvorrichtung, insbesondere Saugrohr für eine Brennkraftmaschine, enthaltend
- einen Einlass (16), der mit mindestens einem Resonanzsammler (11) verbunden ist,
- längenverstellbare Resonanzkanäle (12), die vom mindestens einen Resonanzsammler (11) zu zwei Schwingsammlern (13) führen, wobei die Resonanzkanäle den mindestens einen Resonanzsammler schneckenförmig umgeben und deren Länge durch Drehung mindestens eines den Resonanzsammler enthaltenden Stellkörpers (22) in mindestens einem Stellgehäuse (19, 20) verändert werden kann,
- Saugkanäle (15), die von den Schwingsammlern (13) zu je einer Gruppe von Austritten (18) führen, die mindestens einem Zylinderkopfflansch (14) zur Verbindung mit dem zugehörigen Anschlusssystem, insbesondere der Brennkraftmaschine, zugeordnet sind,
- eine Resonanzklappe (14), über die die Schwingsammler verbindbar und tennbar sind,
**dadurch gekennzeichnet, dass** das Stellgehäuse getrennt von einem Saugrohrgehäuse der Ansaugvorrichtung, enthaltend zumindest die Schwingsammler und die Saugkanäle, ausgeführt ist, wobei eine Verbindung zwischen den beiden Gehäusen zumindest durch Verbindungskanäle, welche zwischen den längenverstellbaren Teilen der Resonanzkanäle und den Schwingsammlern angeordnet sind, realisiert ist, wobei die Verbindungskanäle eine räumliche Distanz zwischen dem durch das mindestens eine Stellgehäuse definierten zylindrischen Volumen und den Schwingsammlern überbrücken.

2. Ansaugvorrichtung nach Anspruch 1, **dadurch gekennzeichnet, dass** mehrere Resonanzkanäle (12) in ein einziges Stellgehäuse (20) integriert sind.

3. Ansaugvorrichtung nach Anspruch 2, **dadurch gekennzeichnet, dass** die Resonanzkanäle (12) hinsichtlich ihrer Winkelstellung zueinander bezogen auf eine Mittelachse (33) des Resonanzsammlers (11) versetzt angeordnet sind.

4. Ansaugvorrichtung nach einem der vorherigen Ansprüche, **dadurch gekennzeichnet, dass** mehrere Resonanzkanäle (12) in einem Stellkörper (22) zusammengefasst sind.

5. Ansaugvorrichtung nach einem der vorherigen Ansprüche, **dadurch gekennzeichnet, dass** mehrere Verbindungskanäle (34) zu einer als Mehrkammerprofil ausgeführten Kanalstruktur (41) zusammengefasst sind, wobei deren Querschnitt für jeden Verbindungskanal eine gesonderte Kammer aufweist.

6. Ansaugvorrichtung nach einem der vorhergehenden Ansprüche, **dadurch gekennzeichnet, dass** ein verschließbarer Umgehungskanal für die Resonanzkanäle (12) vorgesehen ist, der den Resonanzsammler (11) mit den Schwingsammlern (13) derart verbindet, dass der Druckverlust im Umgehungskanal geringer ist als in den Resonanzkanälen.

## Claims

1. Intake device, more especially intake pipe for an internal combustion engine, said intake device comprising
- an inlet (16), which is connected to at least one resonance manifold (11),
- longitudinally adjustable resonance channels (12), which lead from the at least one resonance manifold (11) to two ram manifolds (13), wherein the resonance channels surround the at least one resonance manifold in a spiral manner and their length can be adjusted by rotating at least one control member (22) containing the resonance manifold in at least one control housing (19, 20),
- intake ducts (15), which lead from the ram manifolds (13) to respective groups of outlets (18), which are associated at least with one cylinder head flange (14) for connection to the associated connecting system, more especially the internal combustion engine,
- a resonance flap (14), via which the ram manifolds are connectable and disconnectable,
**characterised in that** the control housing is configured separate from an intake pipe housing of the intake device and contains at least the ram manifold and the intake ducts, wherein a connection between the two housings is effected at least through connecting ducts, which are disposed between the longitudinally adjustable portions of the resonance channels and the ram manifolds, wherein the connecting ducts bridge a spatial distance between the cylindrical volume defined by the at least one control housing and the ram manifolds.

2. Intake device according to claim 1, **characterised in that** a plurality of resonance channels (12) are incorporated into one single control housing (20).

3. Intake device according to claim 2, **characterised in that** the resonance channels (12) are disposed offset to one another with angular positions with reference to a central axis (33) of the resonance manifold (11).

4. Intake device according to one of the previous claims, **characterised in that** a plurality of resonance channels (12) are combined in one control member (22).

5. Intake device according to one of the previous claims, **characterised in that** a plurality of connecting ducts (34) are combined to form one duct structure (41) in the form of a multi chamber profile, wherein the cross-section of the said multi chamber profile includes a separate chamber for each connecting duct.

6. Intake device according to one of the previous claims, **characterised in that** a closable by-pass duct is provided for the resonance channels (12), which by-pass duct connects the resonance manifold (11) to the by-pass duct in such a manner that the pressure loss in the by-pass duct is smaller than the pressure loss in the resonance channels.

## Revendications

1. Dispositif d'admission, en particulier tubulure d'admission de moteur à combustion interne, comprenant
- une entrée (16) qui est reliée à au moins un collecteur de résonance (11),
- des canaux de résonance (12) réglables en longueur qui s'étendent du collecteur de résonance (11) vers deux collecteurs oscillants (13), les canaux de résonance entourant en hélice le collecteur de résonance et leur longueur pouvant être modifiée par la rotation d'au moins un organe de réglage (22) contenant le collecteur de résonance et situé dans au moins un boîtier de réglage (19, 20),
- des canaux d'admission (15) reliant des collecteurs oscillants (13) jusqu'à chaque fois un groupe de sorties (18) associé à au moins une bride de culasse (14) pour la liaison avec le système de branchement concerné, en particulier le moteur à combustion interne,
- un clapet de résonance (14) qui relie ou sépare les collecteurs oscillants,
**caractérisé en ce que**
le boîtier de réglage est réalisé séparément d'un boîtier de tubulure d'admission du dispositif d'admission, comprenant au moins les collecteurs oscillants et les canaux d'admission, une liaison étant réalisée entre les deux boîtiers au moins par des canaux de liaison disposés entre les parties réglables en longueur des canaux de résonance et les collecteurs oscillants, les canaux de liaison couvrant une distance spatiale entre le volume cylindrique défini par le boîtier de réglage et les collecteurs oscillants.

2. Dispositif d'admission selon la revendication 1,
**caractérisé en ce que**
plusieurs canaux de résonance (12) sont intégrés dans un seul boîtier de réglage (20).

3. Dispositif d'admission selon la revendication 2,
**caractérisé en ce que**
les canaux de résonance (12), au niveau de leur position angulaire respective, sont disposés de manière décalée par rapport à l'axe médian (33) du collecteur de résonance (11).

4. Dispositif d'admission selon l'une quelconque des revendications précédentes,
**caractérisé en ce que**
plusieurs canaux de résonance (12) sont regroupés dans un organe de réglage (22).

5. Dispositif d'admission selon l'une quelconque des revendications précédentes,
**caractérisé en ce que**
plusieurs canaux de liaison (34) sont regroupés en une structure de canaux (41) en forme d'un profilé à chambres multiples, dont la section transversale présente une chambre distincte pour chaque canal de liaison.

6. Dispositif d'admission selon l'une quelconque des revendications précédentes,
**caractérisé en ce qu'**
un canal de déviation pouvant être fermé est prévu pour les canaux de résonance (12), qui relie le collecteur de résonance (11) aux collecteurs oscillants (13) de telle sorte que la perte de pression dans le canal de déviation est plus faible que dans les canaux de résonance.
